# EUROPÄISCHE PATENTSCHRIFT

(11) **EP 0 639 934 B1**
(45) Veröffentlichungstag und Bekanntmachung des Hinweises auf die Patenterteilung: **19.04.2000**
(21) Anmeldenummer: 94112426.5
(22) Anmeldetag: 09.08.1994
(51) Int. Cl.: H05B 3/14, C08K 7/06

(54) **Widerstandsheizelement aus Thermoplastwerkstoffen**
Electrical resistance heater made of thermoplastic materials
Dispositif de chauffage à résistance électrique en matières thermoplastiques

(30) Priorität: 19.08.1993 DE 4327874
(43) Veröffentlichungstag der Anmeldung: 22.02.1995
(73) Patentinhaber: Ticona GmbH, 65451 Kelsterbach (DE)
(72) Erfinder: Pfeiffer, Bernhard, Dr., D-65779 Kelkheim (DE); Texier, Anne, Dr., F-59000 Lille (FR)

(56) Entgegenhaltungen:
- DE-A- 4 024 268
- DATABASE WPI Section Ch, Week 8822, Derwent Publications Ltd., London, GB; Class A08, AN 88-150600 & JP-A-63 090 564 (MITSUBISHI MONSANTO) 21. April 1988
- PATENT ABSTRACTS OF JAPAN vol. 12, no. 326 (C-525) 5. September 1988 & JP-A-63 092 672 (MITSUBISHI MONSANTO) 23. April 1988
- DATABASE WPI Section Ch, Week 8039, Derwent Publications Ltd., London, GB; Class A08, AN 80-68854C & JP-A-55 107 426 (SEKISUI CHEMI. IND.) 19. August 1980
- DATABASE WPI Section Ch, Week 9308, Derwent Publications Ltd., London, GB; Class A08, AN 93-060940 & JP-A-05 007 517 (TAKIRON) 19. Januar 1993

## Beschreibung

Die Erfindung betrifft Widerstandsheizelemente aus Thermoplastwerkstoffen mit guten mechanischen und thermischen Eigenschaften.

Widerstandsheizelemente aus Thermoplasten, mit leitendem Material gefüllt, sind prinzipiell bekannt. Verwendet werden dazu unterschiedliche Thermoplaste.

Als leitendes Material werden verschiedene Metalle bzw. Metallegierungen sowie Kohlenstoff unterschiedlicher Modifikation mit relativ hohen Anteilen eingesetzt. Häufig erfolgt der Einsatz des leitenden Materials in Form von Fasern (vergl. DE-PS 4024268, JA-OS 91/37021, JA 83/176220, JA 85/231764 und JA 88/202876).

Es ist nach JA-OS 87/190605 auch bekannt, einen Verbund von geschnittenen Glasfasern und Kohlenstoffasern zu verwenden. Nachteilig wirken sich jedoch die hohen Anteile des leitenden Materials und die durch die mechanischen und thermischen Eigenschaften der verwendeten Thermoplaste begrenzten Einsatzgebiete sowie beim Compoundieren des Materials auftretende Probleme aus.

Der Erfindung liegt das Problem zugrunde, Widerstandsheizelemente mit niedrigem Gehalt an leitenden Material bei guten mechanischen und thermischen Eigenschaften des Thermoplastwerkstoffes zu entwickeln.

Erfindungsgemäß wird das Problem dadurch gelöst, daß das Widerstandsheizelement aus einem faserverstärkten Thermoplastwerkstoff mit 1-60 Gew.-% Glasfasern und 1-20, vorzugsweise 5-15 Gew.-% Stahlfasern besteht. Die mit Glasfasern und Stahlfasern gefüllten Thermoplastgranulate bestehen aus durch Schmelz-Pultrusion mit Thermoplasten imprägnierten Endlosfasersträngen,die nachfolgend auf Faserlänge/Granulatlänge geschnitten werden.

Die Länge der Glasfasern und der Stahlfasern beträgt 5-15 mm Alternativ bestehen die Glasfasergranulate aus Kurzglasfasern: die durch Eincompoundieren von Schnittglas in die Plastschmelze hergestellt werden.

Die erfindungsgemäßen Widerstandsheizelemente weisen folgende Vorteile auf. Die mechanischen Eigenschaften wie z.B. Zugfestigkeit und Wärmeformbeständigkeit werden deutlich verbessert. Durch eine verbesserte Faserverteilung ist eine hohe Dauerbelastbarkeit möglich. Erfindungsgemäß hergestellte Widerstandsheizelemente können vorwiegend für solche Zwecke verwendet werden, wo besondere mechanische und thermische Beanspruchungen auftreten. Das sind z.B. Oberflächenheizungen, Heizungen für Handgriffe, Flüssigkeitsheizer, Sitzheizungen und beheizte Parabolantennen.

Die Erfindung wird nachfolgend durch die Ausführungsbeispiele näher erläutert.

### Beispiel 1:

Ein Polypropylen mit 10 Gew.-% Stahlfasern (Länge: 12,5 mm) und 20 Gew.-% Kurzglasfasern wurde im Spritzguß zu Prüfstäben nach DIN 53455 verarbeitet. Zur Kontaktierung wurden Metallstäbe eingepreßt.

Die mechanischen und themischen Eigenschaften sind im Vergleich zu handelsüblichem Polypropylen in der nachfolgenden Tabelle 1 dargestellt.

**Tabelle 1**

| Kennwert | Norm | Einheit | PP | erfindungsgemäß |
|---|---|---|---|---|
| Zugfestigk. | DIN 53455 | MPa | 30 | über 70 |
| Wärmeform-beständigk. | DIN 53461 | Grad C | | |
| A (1,8 MPa) | | | 40-50 | 72 |
| B (0,45 MPa) | | | 50-80 | 120 |

Bei Betreiben der Prüfstäbe mit einer Stromstärke von 1 Ampere und einer Spannung von 6-9 Volt wurde eine Oberflächentemperatur von 118 Grad Celsius (spezifischer Durchgangswiderstand 0.2 Ohm cm) erreicht. Die Aufheizrate ist in Tabelle 2 dargestellt.

**Tabelle 2**

| Zeit (Sekunden) | Stromstärke (Ampere) | Spannung (Volt) | Temperatur (Grad Celsius) |
|---|---|---|---|
| 0 | 1 | 6 | 25 |
| 240 | 1 | 8 | 74 |
| 300 | 1 | 9 | 92 |
| 360 | 1 | 9,2 | 102 |
| 780 | 1 | 9,13 | 118 |
| 1380 | 1 | 8,15 | 118 |

### Beispiel 2:

Ein Polypropylen gem. Beispiel 1 wurde im Spritzguß zu Platten (80x80x2 mm) verarbeitet. Zur Kontaktierung wurden Metallstäbe eingepreßt. Die Verbesserung der mechanischen und thermischen Eigenschaften trat analog Tabelle 1 im Beispiel 1 ein.

Bei Betreiben der Platten mit einer konstanten Spannung von 4 Volt und einer Stromstärke von ca. 3 Ampere wurde eine Oberflächentemperatur von 85 Grad Celsius (spezifischer Durchgangswiderstand: 0,3-0,4 Ohm cm) erreicht. Die Aufheizrate ist in Tabelle 3 dargestellt.

**Tabelle 3**

| Zeit (Sekunden) | Stromstärke (Ampere) | Spannung (Volt) | Termperatur (Grad Celsius) |
|---|---|---|---|
| 0 | 3,5 | 4 | 28 |
| 30 | 3,3 | 4 | 39 |
| 60 | 3,2 | 4 | 44 |
| 180 | 3,1 | 4 | 48 |
| 540 | 3,0 | 4 | 52 |
| 600 | 3,0 | 4 | 54 |
| 720 | 2,9 | 4 | 65 |
| 900 | 3,0 | 4 | 70 |
| 1800 | 2,9 | 4 | 77 |
| 5400 | 3,0 | 4 | 84 |
| 10800 | 3,0 | 4 | 85 |

### Beispiel 3:

Ein Polyamid 6,6 mit 10 Gern.-% Stahlfasern (Länge 12,5 mm) und 20 Gew.-% Glasfasern (Länge 10 mm) wurde analog Beispiel 2 im Spritzguß zu Platten (80x80x2 mm) verarbeitet. Zur Kontaktierung wurden Metallstäbe eingepreßt.

Die Verbesserung der mechanischen und thermischen Eigenschaften ist in Tabelle 4 dargestellt.

| Kennwert | Norm | Einheit | PA 6,6 | erfindungsgem. |
|---|---|---|---|---|
| Zugfestigk. | DIN 53455 | MPa | 40-60 | über 80 |
| Wärmeformbeständigk. | DIN 53461 | Grad C | | |
| A (1,8 MPa) | | | 80 | 200-220 |
| B (0,45 MPa) | | | 200 | 220-240 |

Bei Betreiben mit einer konstanten Spannung von 4 Volt und einer Stromstärke von ca. 3 Ampere wurde bereits nach ca. 15 Minuten eine Oberflächentemperatur von 93 Grad C erzielt (spezifischer Durchgangswiderstand 0,3-0,4 Ohm cm). Die erfindungsgemäße Platte wurde 4 Stunden im Dauerbetrieb getestet.

## Patentansprüche

1. Widerstandsheizelement aus Thermoplastwerkstoffen mit guten mechanischen und thermischen Eigenschaften, dadurch gekennzeichnet,
daß das Widerstandsheizelement aus einem faserverstärkten Thermoplastwerkstoff mit 1-60 Gew.-% Glasfasern und 1-20, vorzugsweise 5-15 Gew.-% Stahlfasern besteht.

2. Widerstandsheizelement nach Anspruch 1, dadurch gekennzeichnet,
daß die mit Glasfasern und Stahlfasern gefüllten Thermoplastgranulate aus durch Schmelz-Pultrusion mit Thermoplasten imprägnierten Endlosfasersträngen bestehen,die nachfolgend auf Faserlänge/Granulatlänge geschnitten werden.

3. Widerstandsheizelement nach Anspruch 1, dadurch gekennzeichnet,
daß die Länge der Glasfasern und der Stahlfasern 5-15 mm beträgt.

4. Widerstandsheizelement nach Anspruch 1, dadurch gekennzeichnet,
daß die Glasfasergranulate Kurzglasfasern enthalten, die durch Eincompoundieren von Schnittglas in die Plastschmelze hergestellt werden.

## Claims

1. A resistance heating element of thermoplastic materials having good mechanical and thermal properties, wherein the resistance heating element comprises a fiber-reinforced thermoplastic material having 1-60% by weight of glass fibers and 1-20, preferably 5-15% by weight of steel fibers.

2. A resistance heating element as claimed in claim 1, wherein the thermoplastic granules filled with glass fibers and steel fibers comprise continuous fiber strands which have been impregnated with thermoplastics by melt pultrusion and are subsequently cut to fiber length/granule length.

3. A resistance heating element as claimed in claim 1, wherein the length of the glass fibers and of the steel fibers is 5-15 mm.

4. A resistance heating element as claimed in claim 1, wherein the glass fiber granules comprise short glass fibers which are prepared by compounding cut glass into the melt of plastic.

## Revendications

1. Elément de chauffage par résistance à partir de matières thermoplastiques comportant de bonnes propriétés mécaniques et thermiques, caractérisé en ce que l'élément de chauffage par résistance est constitué d'une matière thermoplastique renforcée de fibres avec 1-60% en poids de fibres de verre et 1-20, de préférence 5-15% en poids de fibres d'acier.

2. Elément de chauffage par résistance suivant la revendication 1, Caractérisé en ce que les granulats thermoplastiques chargés de fibres de verre et de fibres d'acier sont constitués de boudins de fibres continues imprégnés de thermoplastiques par fusion-pultrusion, qui sont ensuite coupés à la longueur de fibre/longueur de granulat.

3. Elément de chauffage par résistance suivant la revendication 1, caractérisé en ce que la longueur des fibres de verre et des fibres d'acier s'élève à 5-15 mm.

4. Elément de chauffage par résistance suivant la revendication 1, caractérisé en ce que les granulats de fibres de verre contiennent des fibres de verre courtes qui sont préparées par incorporation de verre de coupe dans la matière fondue plastique.
